# EUROPÄISCHE PATENTANMELDUNG

(11) **EP 1 610 219 A1**
(43) Veröffentlichungstag der Anmeldung: **28.12.2005**
(21) Anmeldenummer: 04014708.4
(22) Anmeldetag: 23.06.2004
(51) Int. Cl.: G06F 9/44

(54) **Programmiersystem**

(71) Anmelder: Renner, Peter, 51515 Kürten (DE)
(72) Erfinder: Renner, Peter, Dipl.-Ing., 51515 Kürten (DE)
(74) Vertreter: Jungen, Rolf

(57) **Zusammenfassung**

Um Personen ohne besondere Programmierkenntnisse in die Lage zu versetzen, selbst eigene Computerprogramme zu erstellen, wird ein computergestütztes Verfahren zum Erstellen und/oder Abarbeiten von Programmcode vorgeschlagen mit zumindest einer Visualisierungsoberfläche zur Darstellung von festlegbaren Objekten, über welche bei der Abarbeitung des Programmcodes Information, insbesondere Daten eingegeben und ausgegeben werden, wobei mittels des erstellten Programmcodes schreibend und lesend auf Objekte der Visualisierungsoberfläche zugegriffen wird. Das erfindungsgemäße Verfahren zeichnet sich dadurch aus, dass Programmbausteine der Kategorie Ablauf und Funktion zur Auswahl bereitgestellt werden, darüber hinaus auch Vorschriften zum Verknüpfen von Programmbausteinen, die den Aufruf der Programmbausteine und deren serielle oder gleichzeitige Abarbeitung regeln. Ferner betrifft die Erfindung auch ein entsprechendes System mit einer Ausführungsumgebung zur Ausführung eines solchen Verfahrens.

## Beschreibung

Die Erfindung betrifft ein computergestütztes Verfahren zum Erstellen und/oder Abarbeiten von Programmcode, mit zumindest einer Visualisierungsoberfläche zur Darstellung von festlegbaren Objekten, über welche bei der Abarbeitung des Programmcodes Information, insbesondere Daten eingegeben und ausgegeben werden, wobei mittels des erstellten Programmcodes schreibend und lesend auf Objekte der Visualisierungsoberfläche zugegriffen wird sowie ein entsprechendes System mit einer Ausführungsumgebung, insbesondere zur Ausführung eines solchen Verfahrens.

Zu Beginn der Entwicklung der PC-Technik in der ersten Hälfte der 80er Jahre konnte jedermann, der sich für die Technik interessierte, kleine Programme für den Personalcomputer erstellen. Die Programmiersprachen wie Basic waren einfach strukturiert und schnell zu lernen. Insofern konnten viele Menschen sowohl für berufliche als auch private Zwecke eigene Programme erstellen. Im Laufe der Entwicklung wurde sowohl die Hardware als auch die Software immer leistungsfähiger, was jedoch dazu führte, dass die Anforderungen an den Ausbildungsstand der Programmierenden erheblich zunahm. Letztlich führte die Entwicklung dazu, dass heutige Programmiersysteme auf der Basis von modernen Programmiersprachen wie Delphi, C++ oder Visual Basic nur von Wenigen bedienbar sind. Letztlich ist das Erstellen von Programmen in der heutigen Zeit ausgebildeten Spezialisten wie Informatikern vorbehalten. Ein Einstieg in die Materie ist nur möglich, wenn zumindest Lehrgänge zur Bedienung derartiger Programmiersysteme besucht oder aufwendige Selbststudien durchgeführt werden.

Somit besteht die Aufgabe der Erfindung darin, Personen ohne besondere Vorkenntnisse auf dem Gebiet in die Lage zu versetzen, selbst eigene Computerprogramme in Form von Softwarecode zu erstellen, sodass der sonst übliche Aufwand zum Erlernen der Bedienung des Programmiersystems entfallen kann.

Diese Aufgabe löst die Erfindung verfahrensseitig mit einem computergestützten Verfahren zum Erstellen und/oder Abarbeiten von Programmcode nach Anspruch 1 beziehungsweise einem System mit einer Ausführungsumgebung für ein derartiges Verfahren nach Anspruch 20. Das erfindungsgemäße Verfahren zeichnet sich dadurch aus, dass Programmbausteine der Kategorie Ablauf und Funktion zur Auswahl bereitgestellt werden, darüber hinaus auch Vorschriften zum Verknüpfen von Programmbausteinen, die den Aufruf der Programmbausteine und deren serielle oder gleichzeitige Abarbeitung regeln.

Dadurch, dass dem Anwender computergestützt zur Erstellung des Programmcodes nur wenige Programmbausteine aus zwei Kategorien bereitgestellt werden, wird der Anwender zur Strukturierung der Aufgabe angeleitet. Durch die vorgegebenen Regeln zum Verknüpfen der Programmbausteine wird automatisch der Ablauf bei der Bearbeitung des Programmcodes festgelegt, der sich aus den einzelnen Programmbausteinen zusammensetzt. Insofern erfolgt eine computergestützte Führung des Anwenders bei der Erstellung des Computerprogramms. Ein Programmieren im herkömmlichen Sinn, bei welchem ein Programmcode eingetippt wird, ist bei dem erfindungsgemäßen computergestützten Verfahren beziehungsweise dem erfindungsgemäßen System nicht erforderlich. Insofern ermöglicht die Erfindung nun auch Nichtinformatikern die Erstellung eines Computerprogramms, ohne dass Kenntnisse in einer Programmiersprache notwendig sind.

Es ist zweckmäßig, wenn Programmbausteine der Kategorie Ablauf seriell verknüpft werden und bei einer Verzweigung der Programmverlauf durch die Festlegung einer Bedingung zu einem von mehreren unterschiedlichen Abläufen geführt wird. Darüber hinaus ist es zweckmäßig, wenn Bausteine der Kategorie Funktion parallel ausgeführt werden, sodass sich die Bausteine der beiden Kategorien Ablauf und Funktion dadurch unterscheiden, dass sie entweder gleichzeitig oder seriell, d.h. nacheinander arbeiten. Dabei liegt es im Ermessen des Anwenders, vorgegebene Programmbausteine aus einem der beiden Kategorien auszuwählen, d.h. zu entscheiden, welchen Bausteintyp er für welche Teilaufgabe einsetzt. Erfindungsgemäß werden durch das System in der Programmbausteinkategorie Ablauf die Bausteintypen Ablaufbaustein, Startbaustein, Ereignisbaustein und Endbaustein bereitgestellt. Diese Ablaufbausteine werden generell durch das System seriell verknüpft, wodurch festgelegt ist, dass ihre Abarbeitung chronologisch erfolgt. Aufgrund der beschriebenen vorgegebenen Regelung zum Verknüpfen der Programmbausteine kann zu einem vorgegebenen Zeitpunkt immer nur ein Programmbaustein der Kategorie Ablauf aktiv sein. Dabei ist es zweckmäßig, wenn wie obenstehend schon angegeben, Abläufe bedingte Verzweigungen ermöglichen.

Der Vollständigkeit halber sei darauf hingewiesen, dass die Bezeichnung der beiden Kategorien der Programmbausteine erfindungsgemäß nicht relevant ist. Insofern sind die Bezeichnungen Ablauf beziehungsweise Funktion auch in beliebiger Art und Weise ersetzbar. Einzige Voraussetzung ist, dass die Programmbausteintypen einer Kategorie generell seriell verknüpft werden, sodass immer nur einer dieser Bausteine aktiv ist und darüber hinaus ein Bausteintyp der anderen Kategorie parallel, d.h. gleichzeitig zu einem oder mehreren Bausteintypen der anderen Kategorie ausgeführt wird, die hier als Funktion bezeichnet ist. Diese erledigt Aufgaben, die parallel, d.h. gleichzeitig zu Abläufen ausgeführt werden.

Im erfindungsgemäßen System ist der Bausteintyp Startbaustein der Kategorie Ablauf so eingerichtet, dass dieser einen anderen Typ der Kategorie Ablauf mit Ausnahme des Bausteintyps Ereignisbaustein aufruft. Dies kann somit ein Ablaufbaustein oder ein Endbaustein sein. Darüber hinaus kann der Startbaustein auch einen Funktionsbaustein aufrufen, welcher der Kategorie Funktion zugeordnet ist.

Eine weitere zweckmäßige computergestützt ausgeführte Regel zum Verknüpfen der vorgegebenen Programmbausteine besteht darin, dass der Ereignisbaustein durch Ereignisse, die im Programmablauf eintreten können, aufgerufen wird und seinerseits einen Ablaufbaustein, einen Endbaustein oder einen Funktionsbaustein aufruft. Damit ist im erfindungsgemäßen System festgelegt, dass der Start eines Ablaufs entweder durch einen Startbaustein oder ein Ereignis, das in einem Ereignisbaustein abgearbeitet wird, erfolgt. Ein Ereignis, das den Start eines Ablaufs auslöst, kann beispielsweise ein interaktives Betätigen eines Bedienobjektes auf der Visualisierungsoberfläche sein.

Zweckmäßigerweise kann mit den vorgegebenen Regeln zum Verknüpfen der Programmbausteine ein Ablaufbaustein entweder von einem Startbaustein, einem Ereignisbaustein oder einem anderen Ablauf aufgerufen werden und seinerseits einen Ablaufbaustein, einen Endbaustein oder einen Funktionsbaustein aufrufen. Dabei ist es zweckmäßig, wenn in solchen Abläufen bedingte Verzweigungen vorgesehen werden.

Gemäß der vorgegebenen Verknüpfungsregel bildet der Typ Endbaustein den Abschluss eines jeden Ablaufes. Dieser wird entweder von einem Startbaustein, einem Ereignisbaustein oder einem Ablaufbaustein aufgerufen. Er kann seinerseits einen Funktionsbaustein aufrufen.

Im Rahmen der Vorgabe der Verknüpfungsregeln kann festgelegt sein, dass der Funktionsbaustein entweder von einem Startbaustein, einem Ereignisbaustein oder einem Ablaufbaustein aufgerufen werden kann. Dabei erledigt der Funktionsbaustein seine Aufgabe parallel zu den aufrufenden Bausteinen.

Überaus hilfreich bei der Erstellung von Programmcode für den Anwender ist es, wenn im erfindungsgemäßen System den ausgewählten Programmbausteinen jeweils ein Symbol zugeordnet ist, das in einem Strukturschaubild dargestellt wird. Dabei kann jedem Typ von Programmbaustein ein vorgegebenes Symbol zur Darstellung im Strukturschaubild zugeordnet sein. Nach der Auswahl der Bausteine verwendet das System unter Berücksichtigung der vorgenannten Regeln für die Verknüpfung der Programmbausteine diese Symbole automatisch mittels Linien zur Darstellung der seriellen oder parallelen Abarbeitung, wodurch die Programmstruktur und der Programmverlauf dargestellt sind. Das System erzeugt automatisch Pfeile in den Verbindungslinien zwischen den Symbolen der Programmbausteine im Strukturschaubild, wodurch der Programmverlauf angezeigt wird, sodass das erfindungsgemäße System dem Anwender die Erfassung der Programmstruktur erleichtert.

Eine weitere Verbesserung des Strukturschaubildes wird dadurch erreicht, dass Symbole für Programmbausteine der Kategorie Ablauf zu Symbolen für Programmbausteine der Kategorie Funktion grundsätzlich auf zueinander senkrechten Pfaden angeordnet werden beziehungsweise sind. Beispielsweise kann vorgesehen sein, dass Symbole der seriell verknüpften Programmbausteine grundsätzlich vertikal angeordnet sind und die parallel zu den aufrufenden Bausteinen arbeitende Programmbausteine grundsätzlich horizontal angeordnet sind. Die Bezeichnung "grundsätzlich" bedeutet hierbei, dass bei einer Programmverzweigung in mehrere Abläufe ein horizontaler Versatz zur Anordnung der Symbole vorgesehen sein kann und bei einem Aufruf von mehreren Funktionen aus einem Baustein des Typs Ablauf ein vertikaler Versatz zwischen den Funktionsbausteinen vorgesehen sein kann.

Diese Darstellungsregeln für das Strukturschaubild, die auf die obenstehend beschriebenen Verknüpfungsvorschriften der unterschiedlichen Programmbausteine zurückgehen, führen weiterhin dazu, dass die Verbindungslinien zwischen den Programmbausteinen eines Ablaufs grundsätzlich vertikal verlaufen und die Verbindungslinien von den aufrufenden Bausteinen des Typs Ablauf zu den jeweiligen aufgerufenen Funktionsbausteinen grundsätzlich horizontal verlaufen.

Es versteht sich, dass bei den angegebenen Darstellungsregeln die beiden Richtungen horizontal beziehungsweise vertikal vertauschbar sind, ohne den Rahmen der Erfindung zu verlassen. In diesem Sinne kann es zweckmäßig sein, wenn im Strukturschaubild Symbole der Bausteine der Kategorie Ablauf grundsätzlich horizontal und Symbole der Bausteine der Kategorie Funktion grundsätzlich vertikal angeordnet sind.

Es kann zweckmäßig sein, dass das erfindungsgemäße System zum computergestützten Erstellen und/oder Abarbeiten von Programmcode einen Entwicklungsmodus und einen Laufzeitmodus bereitstellt, wobei im Laufzeitmodus ein im Entwicklungsmodus erstellter Programmcode abgearbeitet wird und die Symbole im Strukturschaubild gekennzeichnet sind, deren Programmanweisungen gerade abgearbeitet werden. Dies kann beispielsweise durch eine Farbänderung oder eine andere Markierung des jeweiligen Symbols realisiert sein, das dem gerade abgearbeiteten Programmbaustein zugeordnet ist.

Die Bedienung des erfindungsgemäßen Systems kann dadurch erleichtert werden, dass ein Symbol eines Programmbausteins im Strukturschaubild einen virtuellen Programmcontainer darstellt, wobei der Zugang zum Programmcode des jeweiligen Programmbausteins durch Öffnen des Programmcontainers erfolgt, beispielsweise durch Auswählen wie Anklicken des Symbols. Nach einem erfindungsgemäßen Verfahren wird beim Öffnen des Programmcontainers eine neue Anzeigeoberfläche erzeugt, in welcher der Programmcode des betreffenden Programmbausteins bearbeitet werden kann. Vorteilhafterweise kann vom erfindungsgemäßen System für jeden Baustein, der im Strukturschaubild in Form des jeweiligen Symboles angezeigt wird, ein vorläufiger Programmcode bereitgestellt sein, der aus einer Anfangszeile und einer Endzeile des Programmbausteins besteht. Zwischen diesen beiden Programmzeilen können nun vom Anwender computergestützt Programmanweisungen angelegt werden.

Um das erfindungsgemäße Verfahren unkompliziert zu halten, kann vorgesehen sein, dass das erfindungsgemäße System dem Anwender nur zwei Programmanweisungskategorien zur Auswahl bei der Einfügung einer Programmanweisung bereitstellt, insbesondere die Anweisungskategorien Abfrage und Aktion. Dies erleichtert wiederum das computergestützte Führen des Anwenders bei der Erstellung des Programmcodes. Dieser muss letztlich nur die Entscheidung treffen, ob bei der entsprechenden Programmanweisung eine Information benötigt wird (Abfrage) oder ob ein Befehl auszuführen (Aktion). Es versteht sich wiederum, dass die Bezeichnung der Anweisungskategorien "Abfrage" beziehungsweise "Aktion" mit einer beliebigen anderen Bezeichnung austauschbar ist. In jedem Fall wird jedoch in der einen Kategorie eine Information eingeholt und in der anderen Programmanweisungskategorie ein Befehl ausgeführt. Darüber hinaus ist es auch möglich, sogenannte Infozeilen beziehungsweise Kommentare einzufügen, die jedoch für den Programmablauf unrelevant sind.

Es ist zweckmäßig, wenn mit der Abfrageanweisung Zustände wie Bedienerhandlungen, Eingabeparameter, Datenbankabfragen sowie Zustände externer Einrichtungen und Sensorwerte ermittelt werden. Beispielsweise kann abgefragt werden, ob eine Temperatur einen vorgegebenen Wert überschritten hat, ob ein Behälter gefüllt ist, ein Aggregat eingeschaltet ist oder ob eine Taste betätigt wurde. Letztlich kann mit der Abfrageanweisung ein beliebiger Zustand oder Wert erfasst werden. Es ist zweckmäßig, wenn die Abfrageanweisung die grundlegende Struktur "wenn (logische Operation) dann" aufweist, wobei ähnliche Abfrageanweisungen wie "wenn nicht (logische Operation) dann", "wenn dann", "wenn (logische Operation) dann wiederhole" auch möglich sind.

Vorteilhafterweise ermöglicht eine Aktionsanweisung, d.h. ein Befehl eine beliebige Operation, insbesondere eine Prozesssteuerung, eine Darstellung für Information für das Bedienpersonal, die Speicherung von Daten (Dokumentation), mathematische Operationen (beispielsweise Berechnen von Formeln), programmtechnische Operationen wie beispielsweise Schleifen, Zuweisungen etc.

Wie der Fachmann erkennt, impliziert eine Abfrageanweisung mit "wenn (logische Operation) dann" Aktionsanweisungen. Nur wenn die Abfrage mit logisch 1, d.h. wahr beantwortet wird, erfolgt die angegebene Aktion. In jedem Fall wird dem Nutzer des erfindungsgemäßen Systems nur die Möglichkeit gegeben, entweder eine Aktionsanweisung oder eine Abfrageanweisung für die Einfügung von Programmanweisungen in einen Programmcontainer eines Programmbausteins auszuwählen.

Möchte der Anwender eine neue Programmanweisung insbesondere in Form einer Programmzeile hinzufügen, werden automatisch die Anweisungskategorien Abfrage und Aktion angezeigt. Durch Anwahl einer dieser beiden Kategorien wird die entsprechende Programmanweisung eingefügt. Dabei ist es zweckmäßig, wenn die eingefügte Anweisung in Form einer virtuellen Anweisung oder einer Anweisung im Rohtext erfolgt, die nachfolgend computerunterstützt vom Anwender in eine reale, ausführbare Programmanweisung umgewandelt wird. Dabei kann es zweckmäßig sein, wenn über mehrere Auswahlverfahren bestimmte Teile der virtuellen Programmanweisung ersetzt werden, sodass sich letztlich die ausführbare Programmanweisung, insbesondere in einer vorgegebenen Hochsprache ergibt. Wesentlich ist dabei, dass der Anwender vom erfindungsgemäßen System "zwangsgeführt wird", sodass letztlich Programmierfehler ausgeschlossen sind.

Hierbei ist es zweckmäßig, wenn vom erfindungsgemäßen System auswählbare Programmanweisungen vorgeschlagen werden, welche zumindest ein sogenanntes Schlüsselwort umfassen. Ein solches Schlüsselwort dient als Platzhalter für zumindest ein weiteres Schlüsselwort und/oder zumindest einen Programmanweisungsabschnitt. Diese Schlüsselworte sind als unfertige Teile einer Anweisung anzusehen. Sie sind substituierbar durch weitere Schlüsselworte, Anweisung, Variable, Objekte, Eigenschaften von Objekten, Rechenzeichen, logische Operatoren, Formeln und dergleichen. Diese Schlüsselworte werden im Verlauf des erfindungsgemäßen Verfahrens zwingend durch ausführbaren Programmtext ersetzt. Erst wenn alle Schlüsselworte in der Rohanweisung durch ausführbaren Programmtext ersetzt worden sind, ist die Anweisung fertiggestellt.

Für dieses Ersetzen der Schlüsselworte wird erfindungsgemäß ein besonders vorteilhaftes Verfahren mit Hilfe von Auswahllisten durchgeführt, wobei jedem Schlüsselwort eine derartige Auswahlliste im erfindungsgemäßen System zugeordnet ist. Eine solche Auswahlliste weist mehrere Ersatztexte auf, mit welchen das Schlüsselwort ersetzbar ist, wobei ein solcher Ersatztext insbesondere einen abarbeitbaren Programmtext wie die obenstehend angegebenen oder auch ein weiteres Schlüsselwort umfasst. Erfindungsgemäß wird verfahrensseitig bei Anwahl eines solchen Schlüsselwortes in der eingefügten virtuellen Programmanweisung die zugeordnete Auswahlliste angezeigt, aus welcher der Anwender eine passende Position auswählt. Vorteilhafterweise kann dieser Vorgang des Ersetzens von Schlüsselwörtern in einer eingefügten virtuellen Programmanweisung solange fortgesetzt werden, bis alle Schlüsselwörter durch einen ausführbaren Programmanweisungsabschnitt ersetzt sind. Mit diesem erfindungsgemäßen Verfahren zur Erstellung eines Programmcodes wird jeder in die Lage versetzt, ohne besondere Vorbildung rechnergestützt ein Computerprogramm zu erzeugen, da die Inhalte der einzelnen Listenpunkte der jeweiligen Auswahlliste so gestaltet sind, das sie, wenn sie das Schlüsselwort ersetzen, einen syntaxfehlerfreien Programmcode erzeugen.

Dabei kann es vorteilhaft sein, wenn die Schlüsselworte in der virtuellen Programmanweisung deutlich hervorgehoben sind, z.B. durch Unterstreichen oder eine farbige Kennzeichnung.

Besonders zweckmäßig kann es sein, wenn die Auswahllisten auch Programmanweisungen wie Zuweisungen, Schleifen oder Aufrufe umfassen, sodass letztlich das gesamte Programmierhandwerkzeug rechnergestützt und situationsabhängig dem Anwender bereitgestellt werden kann. Insofern erübrigt sich auch die Bereitstellung eines Handbuchs zur Bedienung des erfindungsgemäßen Systems beziehungsweise zur Ausführung des erfindungsgemäßen Verfahrens.

Letztlich ist es mit der Erfindung für den Anwender unnötig, eine Programmiersprache zu erlernen um einen Programmcode zu erstellen, der auf einem Computer ausführbar ist. Dabei kann das erfindungsgemäße System so ausgebildet sein, dass der Anwender nur Werte von Konstanten und einmalig den Namen oder Bezeichner von Variablen, Objekten etc. eingeben muss, jedoch keinen Programmtext in Form von Programmanweisungen. Der Programmtext wird beispielsweise mit Hilfe eines Eingabemittels wie einer Computermaus automatisch erzeugt, sodass Syntaxfehler im Programm ausgeschlossen sind. Darüber hinaus werden auch unlogische oder nicht sinnvolle Programmsequenzen vollkommen vermieden, da die Auswahlliste als Ersatz für das jeweilige Schlüsselwort nur sinnvolle und logische Einträge ermöglicht. Dies hat zur Folge, dass mit dem erfindungsgemäßen Verfahren beziehungsweise dem erfindungsgemäßen System Fehlermeldungen bei der Erstellung des Programmcodes beziehungsweise deren Kompilierung und/oder Ausführung, wie sie nach dem Stand der Technik erforderlich sind, vollkommen entbehrlich sind. Dagegen kann es jedoch vorteilhaft sein, wenn eine Fehlermeldung in solchen Situationen angezeigt wird, in denen versucht wird, den Programmcode ablaufen zu lassen, obwohl zumindest eines der Schlüsselwörter in einem der Programmabschnitte eines Programmbausteins noch nicht wie beschrieben ersetzt worden ist.

Darüber hinaus kann es zweckmäßig sein, wenn durch den Anwender angelegte Objekte, insbesondere Visualisierungsobjekte, Parameterobjekte, Variablen, im Strukturschaubild angelegte Programmbausteine etc. automatisch in die jeweiligen Auswahllisten mit ihren individuellen Bezeichnern aufgenommen werden. Auf diese Weise ist sichergestellt, dass alle möglichen Programmtextabschnitte, mit welchen ein Schlüsselwort ersetzt werden kann, auch in der jeweiligen Auswahlliste angezeigt wird. Da zweckmäßigerweise auch Programmbefehle wie Zuweisungen, Schleifen, Aufrufe in den Auswahllisten enthalten sein können, hängt der Umfang der Auswahllisten von der Mächtigkeit der verwendeten Sprache und der Anzahl der vom Anwender angelegten Objekte ab.

Darüber hinaus kann es zweckmäßig sein, wenn im erfindungsgemäßen System die Möglichkeit besteht, festzulegen, welche Eigenschaften von Objekten in den Auswahllisten aufgenommen werden. Auf diese Weise kann der Umfang von bestimmten Auswahllisten, die Objekteigenschaften beinhalten, beschränkt werden.

Darüber hinaus kann jedoch vorteilhaft auch ein Expertenmodus vorgesehen sein, welchem Auswahllisten bereitgestellt werden, die Zugriff auf alle Eigenschaften durch das zu erstellende Programm ermöglichen. Im Normalmodus wird dagegen der Zugriff auf die wichtigen Eigenschaften per Voreinstellung bereitgestellt. Diese Voreinstellungen kann der Anwender im erfindungsgemäßen System verändern und somit seinen individuellen Wünschen und Fähigkeiten anpassen.

Wie der Fachmann erkennt, kann das erfindungsgemäße System zum computergestützten Erstellen und/oder Abarbeiten von Programmcode schon durch eine Ausführungsumgebung bereitgestellt werden, welche ein Eingabemittel wie eine Tastatur und/oder eine Computermaus, ein Darstellungsmittel wie ein Monitor sowie ein Datenverarbeitungsmittel wie eine Prozessoreinrichtung sowie ein Speichenmittel umfasst, in welches ein Softwarecode geladen werden kann, mit dem ein erfindungsgemäßes Verfahren ausführbar ist. Ein herkömmlicher PC ist als Hardware für die Durchführung des erfindungsgemäßen Verfahrens vollkommen ausreichend.

Wie der Fachmann darüber hinaus erkennt, besteht die Erfindung aus mehreren grundlegenden Erfindungsgedanken, die auch unabhängig voneinander zu sehen sind:
- dem computergestützen Bereitstellen von nur zwei Kategorien von Programmbausteinen (Ablauf, Funktion), welche die Programmanweisungen enthalten,
- dem computergestützten Bereitstellen eines Strukturschaubildes, welches das Zusammenwirken der Programmbausteine übersichtlich darstellt,
- dem computergestützten Bereitstellung von Programmanweisungen von nur zwei Kategorien (Abfrage/Aktion), wodurch eine computergestützte Methode bereitgestellt wird, welche die Umsetzung der Programmieraufgabe in den Programmcode erleichtert,
- ein spezielles, computergestütztes Verfahren um Programmanweisungen zu erstellen, ohne dass der jeweilige Programmcode vom Anwender eingetippt werden muss.

Die Erfindung wird im Folgenden durch das Beschreiben einer Ausführungsform unter Bezugnahme auf die beiliegenden Zeichnungen beschrieben, wobei
- Fig. 1: ein schematischer Aufbau eines erfindungsgemäßen Programmiersystems,
- Fig. 2: Programmbausteinsymbole eines Strukturschaubildes,

- Fig. 3: beispielhafte, jeweils einen Programmbaustein dar- stellende Symbole,
- Fig. 4: ein Beispiel eines Ablaufs, der durch einen Ereig- nisbaustein gestartet wird,
- Fig. 5a: einen Ausschnitt eines Visualisierungsschaubildes mit der Ausgabe "Bild A",
- Fig. 5b: den gleichen Ausschnitt des Visualisierungsschaubil- des mit der Ausgabe "Bild B",
- Fig. 5c: dem gemäß der Erfindung erstellten Programmcode zur Anzeige der Bilder "Bild A" und "Bild B", und
- Fig. 6a, b: beispielhaft die Erstellung einer Abfrageanweisung ohne die Notwendigkeit zum Eintippen einer Programm- anweisung
zeigt.

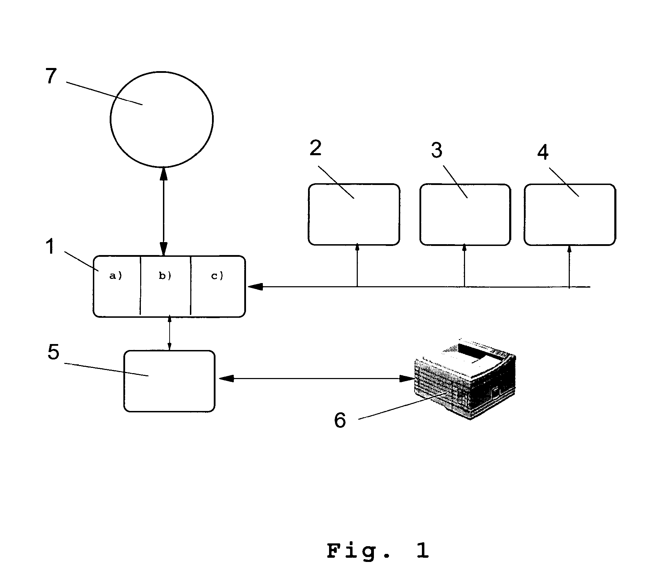

Fig. 1 zeigt in einer Prinzipskizze ein erfindungsgemäßes System mit einer Ausführungsumgebung zum computergestützten Erstellen und Abarbeiten von Programmcode. Diese umfasst einen PC 1, welcher ein Datenverarbeitungsmittel 1a in Form einer CPU, Speichermittel 1b zum Speichern von Softwarecode für die Durchführung des erfindungsgemäßen Verfahrens, zum Speichern einer Datenbank während der Ausführung des Verfahrens sowie zum Speichern des computergestützt erstellten Programmcodes und Eingabemittel 1c in Form einer Tastatur und Computermaus aufweist. Der PC 1 ist ferner an Anzeigemittel in Form von Bildschirmen 2, 3, 4 angeschlossen, auf welchen ein Visualisierungsschaubild, ein Parameterschaubild sowie ein Strukturschaubild dargestellt sind. Darüber hinaus weist der PC 1 eine Umweltschnittstelle 7 auf, mit der das System nach außen kommunizieren kann. Ferner ist der Rechner über eine Schnittstelle 5 mit einem Drucker 6 verbunden.

Das Parameterschaubild 2 dient zur Anzeige von über die Tastatur 1c eingegebenen Parameter. Somit können Daten eingegeben werden, die den nachfolgenden Programmablauf beeinflussen. Auf diese Weise können auch Daten für einen späteren Durchlauf angegeben werden, wenn ein erstelltes Programm gerade abläuft. Somit können Parameterdateien für spätere Programmabläufe vorgesehen werden. Das Visualisierungsschaubild 3 dient einerseits zum Erstellen von Objekten während der Programmerstellung und ferner zum Beobachten der Objekte während der erstellte Programmcode abläuft. Das Strukturschaubild 4 dient im wesentlichen zum Strukturieren der Programmieraufgabe während der Erstellung des Programmcodes. Läuft der erstellte Programmcode ab, kann im Laufzeitmodus über eine Markierung von Programmbausteinen bzw. von deren Symbolen angezeigt werden, welche Programmbausteine beziehungsweise welcher Programmbaustein gerade abgearbeitet wird.

Während der Laufzeit ist dem Anwender der Zugang zum erstellten Programmcode, der auch im Speicher 1b abgelegt ist, verwehrt. Dieser kann im Entwicklungsmodus über die Bildschirme 2, 3, 4 bearbeitet werden. Die Druckerschnittstelle 5 beinhaltet auch eine Konfiguration der Datenausgabe in Form von Formularen, die vom Drucker 6 ausgegeben werden. In der angegebenen Ausführungsform weist das System eine Umweltschnittstelle zur Verbindung mit Sensoren auf, mit denen Messdaten erfasst werden können. Darüber hinaus können über diese Schnittstelle Steuersignale ausgegeben werden, die externe Vorgänge steuern.

Der Anwender kann mittels des in Fig. 1 angegebenen Systems im Strukturschaubild 4 computerunterstützt verschiedene Typen von Programmbausteinen auswählen, die dann im Strukturschaubild angezeigt werden. Diese Programmbausteine werden als Symbole dargestellt und können im Strukturschaubild auf die Oberfläche gezogen und angeordnet werden. Sie werden dann vom System automatisch mit vorgegebenen Regeln über Linien verbunden, wodurch das Gerüst des zu erstellenden Programms festgelegt ist. Letztlich kann mit dieser computergestützten Anordnung von Programmbausteinen jedes beliebige Programm erzeugt werden. Durch Anwahl des jeweiligen Bausteins bzw. des Symbols wird der Zugang zu dem Programmcodeabschnitt des Bausteins ermöglicht.

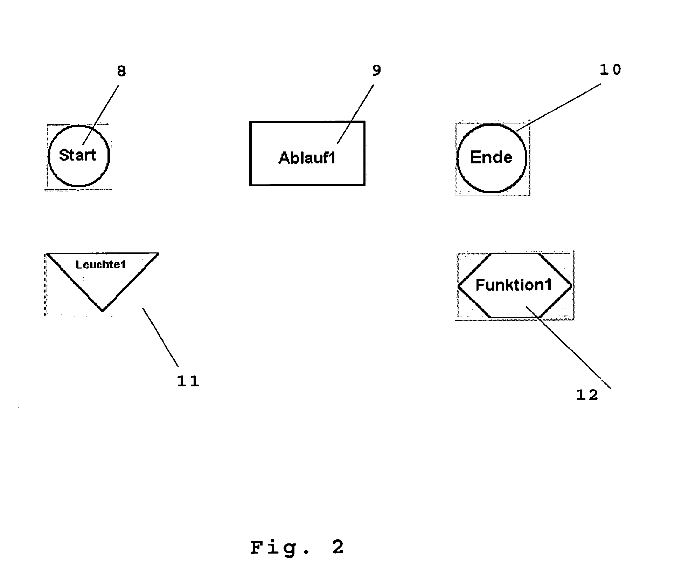

Fig. 2 zeigt mehrere, jeweils einen Programmbaustein darstellende Symbole, wie sie in einem Strukturschaubild verwendet werden. Der Bausteinkategorie Ablauf gehören die Typen Ablaufbaustein 9, Ereignisbaustein 11, Startbaustein 8 und Endbaustein 10 an. Abläufe werden vom System seriell verknüpft, wodurch ihre Arbeitsweise chronologisch ist. Somit kann zu einem gegebenen Zeitpunkt immer nur ein Baustein der Kategorie Ablauf aktiv sein. Abläufe ermöglichen bedingte Verzweigungen.

In der Figur ist daneben auch ein Bausteintyp Funktionsbaustein bzw. dessen Symbol 12 gezeigt, welcher der Bausteinkategorie Funktion angehört. Funktionen erledigen Aufgaben, die gleichzeitig, d.h. parallel zu Abläufen ausgeführt werden.

Programmbausteine können im erfindungsgemäßen Programmiersystem nach vorgegebenen Regeln verknüpft werden. Der Startbaustein 8 ruft beispielsweise einen anderen Bausteintyp der Kategorie Ablauf außer dem Ereignisbaustein 11 auf. Dies kann ein Ablaufbaustein 9 oder ein Endbaustein 10 sein. Darüber hinaus kann der Startbaustein 8 auch einen Funktionsbaustein 10 aufrufen.

Der Ereignisbaustein 11 wird durch Ereignisse, die im Programmverlauf eintreten können, aufgerufen und kann seinerseits einen Ablaufbaustein 9, einen Endbaustein 10 oder einen Funktionsbaustein 12 aufrufen.

Der Start eines Ablaufs kann daher durch einen Startbaustein 8 oder einen Ereignisbaustein 11 erfolgen. Ein Ereignis, das den Start eines Ablaufs auslöst, kann beispielsweise die Anwahl eines Bedienobjektes in einem Visualisierungsschaubild sein.

Die implementierten Verknüpfungsregeln legen ferner fest, dass der Ablaufbaustein 9 entweder von einem Startbaustein 8, einem Ereignisbaustein 11 oder einem Ablaufbaustein 9 aufgerufen wird und seinerseits einen Ablaufbaustein 9, einen Endbaustein 10 oder einen Funktionsbaustein 12 aufrufen kann. Darüber hinaus sind in Abläufen bedingte Verzweigungen möglich.

Die Verknüpfungsregeln der beschriebenen Ausführungsform besagen ferner, dass der Endbaustein 10 den Abschluss eines Ablaufs bildet. Dieser wird entweder von einem Startbaustein 8, einem Ereignisbaustein 11 oder einem Ablaufbaustein 9 aufgerufen. Er kann seinerseits einen Funktionsbaustein 12 aufrufen.

Dieser Funktionsbaustein 12 arbeitet parallel zu Abläufen. Er wird entweder von einem Startbaustein 8, einem Ereignisbaustein 11, einem Ablaufbaustein 9 oder einem Endbaustein 10 aufgerufen. Der Funktionsbaustein 12 selbst kann keinen Programmbaustein aufrufen.

Dem Anwender werden vom System nur die genannten Programmbausteine zur Auswahl angeboten, die sich in die Kategorien Ablauf und Funktion aufteilen lassen. Diese ausgewählten Programmbausteine werden dann wie in Fig. 2 angegeben mittels zugeordneter Symbole, welche unter Umständen vom Anwender mit einem Bezeichner wie einem Namen versehen werden können, im Strukturschaubild angezeigt.

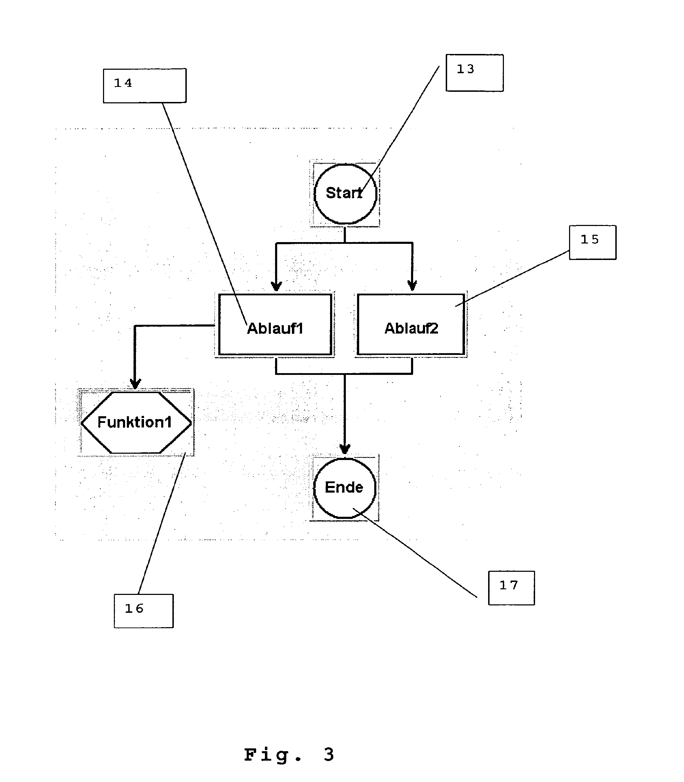

Fig. 3 zeigt nun ein Strukturschaubild, in welchem das System automatisch die Programmbausteine mittels Linien miteinander verbunden hat, wodurch der Programmverlauf und die Programmstruktur verdeutlicht ist. Immer wenn ein weiteres, einen Programmbaustein darstellendes Symbol vom Anwender auf dem Strukturschaubild angelegt wird, erfolgt je nach Typ des neuen Bausteins automatisch die Anordnung diesen Symbols und die Verbindung zu dem aufrufenden Symbol nach den vorgegebenen Regeln durch das erfindungsgemäße System. Die gezeigten Symbole 13 bis 17 dienen der Darstellung von zugeordneten Programmbausteinen.

Entsprechend den obenstehend angegebenen Regeln zum Verknüpfen der Programmbausteine werden die Symbole 13 bis 17 durch das System angeordnet und automatisch mit Linien verbunden, sodass der Programmablauf und die Programmstruktur wiedergegeben ist. Die Pfeile in den Verbindungslinien zwischen den Symbolen verdeutlichen den Programmablauf. Die Programmstruktur wird darüber hinaus durch die grundsätzlich vertikale Anordnung der seriell verknüpften Ablaufbausteine 13, 14, 15 und 17 dargestellt, während der parallel arbeitende Funktionsbaustein 16 zum aufrufenden Ablaufbaustein Ablauf 1 horizontal angeordnet ist.

Die Verbindungslinien zu dem Funktionsbaustein 16 weist einen grundsätzlich horizontalen Verlauf auf, wobei ein vertikaler Versatz aufgrund der Anordnung der Symbole notwendig ist. Die Verbindungslinien zwischen dem Startbaustein 13 und den beiden Ablaufbausteinen 14, 15 weisen einen grundsätzlich vertikalen Verlauf auf, wobei ein horizontaler Versatz aufgrund der Anordnung der Symbole notwendig ist.

Die Symbole des Strukturschaubildes in Fig. 3 dienen als virtuelle Container für den jeweiligen Programmcodeabschnitt. Der Zugang zu dem Programmcodeabschnitt erfolgt durch Anklicken der Symbole. Es öffnet sich daraufhin ein Fenster, in welchem der Programmcodeabschnitt bearbeitet werden kann.

Das erfindungsgemäße System stellt in der beschriebenen Ausführungsform einen Entwicklungsmodus und einen Laufzeitmodus zur Verfügung, wobei in Letzterem der erstellte Programmcode abgearbeitet wird. Beim Start des Programms wird entsprechend der Darstellung in Fig. 3 zuerst der Programmcodeabschnitt abgearbeitet, welcher dem Symbol 13 des Startbausteins zugehörig ist. Der Startbaustein 13 kann entweder den Ablaufbaustein "Ablauf 1" 14 oder den Ablaufbaustein "Ablauf 2" 15 aufrufen. Hierfür ist im Programmcodeabschnitt des Startbausteins 13 eine bedingte Verzweigung vorgesehen, die dafür sorgt, dass entweder der Ablaufbaustein 14 oder der Ablaufbaustein 15 aufgerufen wird.

Wie in Fig. 3 dargestellt, ruft der Ablaufbaustein 14 bedingt oder unbedingt den Funktionsbaustein 16 auf. Dessen Programmcodeabschnitt wird parallel zu dem Ablauf, bestehend aus den Programmbausteinen 13,(14; 15) und 17 abgearbeitet.

Der Funktionsbaustein 16 unterscheidet sich von den in herkömmlichen Programmiersprachen bekannten Subprozeduren. Derartige Subprozeduren unterbrechen den Programmablauf. Dagegen wird der Funktionsbaustein 16 parallel zu dem aufrufenden Programmteil abgearbeitet und stellt damit ein neuartiges Element dar. Dieser Funktionsbaustein kann vorteilhaft bei zeitaufwendigem Vorgängen genutzt werden, die dann parallel ablaufen können. Je nach Anwendung kann dabei der aufrufende Programmbaustein mit dem aufgerufenen Programmbaustein Daten austauschen.

Die Ablaufbausteine 14, 15 rufen jeweils unbedingt den Endbaustein 17 auf. Hier erfolgt keine Bedingungsabfrage, da der Programmverlauf entweder über den Ablaufbaustein 14 oder den Ablaufbaustein 15 erfolgt. Im Endbaustein 17 können Programmteile abgelegt sein, die vor Abschluss des Programmes ausgeführt werden müssen. In einer besonderen Ausführungsform ist im Endbaustein vorgesehen, die Ergebnisse zu speichern und Ausdrucke zu erzeugen (siehe Fig. 1).

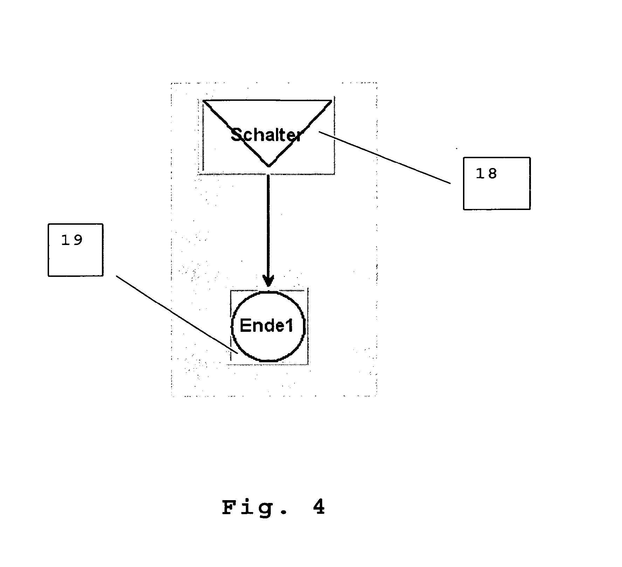

Fig. 4 zeigt ein Strukturschaubild mit einem Ereignisbaustein 18, der durch einen Endbaustein 19 abgeschlossen ist. Der Ereignisbaustein 18 wird durch Ereignisse, die im Programmablauf eintreten können, aufgerufen und kann seinerseits einen Ablaufbaustein, einen Endbaustein oder einen Funktionsbaustein aufrufen. Solche Ereignisse können z.B. Bedienhandlungen sein, die durch Anklicken auf Visualisierungsobjekte in Visualisierungsschaubildern ausgelöst werden. Derartige Ereignisse können während der Laufzeit des erstellten Programms jederzeit auftreten.

Der Ereignisbaustein 18 startet einen Ablauf, welcher sich nur durch die Art des Startes von einem Ablauf gemäß Fig. 3 unterscheidet. Während ein in Fig. 3 dargestellter Ablauf in einer Anwendung nur einmal auftreten kann, können Abläufe entsprechend Fig. 4 in beliebiger Anzahl auftreten, die parallel ausgeführt werden. Diese Abläufe gemäß Fig. 4, welche durch das Ereignismodul 18 gestartet werden, arbeiten unabhängig voneinander und auch unabhängig von einem Ablauf gemäß Fig. 3, der durch einen Startbaustein 13 gestartet wird. Hierdurch verdeutlicht sich auch der Unterschied zum Funktionsbaustein 16. Dieser arbeitet zwar auch parallel zu einem Ablauf, wird jedoch von einem Programmbaustein des Typs Ablauf über einen Datenkanal aufgerufen und ist somit diesem Ablauf zugehörig.

Der Ereignisbaustein 18 ist wie in Fig. 4 dargestellt seriell mit dem Endbaustein 19 verbunden, wobei wiederum diese Verbindung durch das System automatisch erzeugt wird. In beiden Bausteinen kann ein beliebiger Programmcodeabschnitt untergebracht werden, der ausgeführt wird, wenn das den Ablauf auslösende Ereignis auftritt.

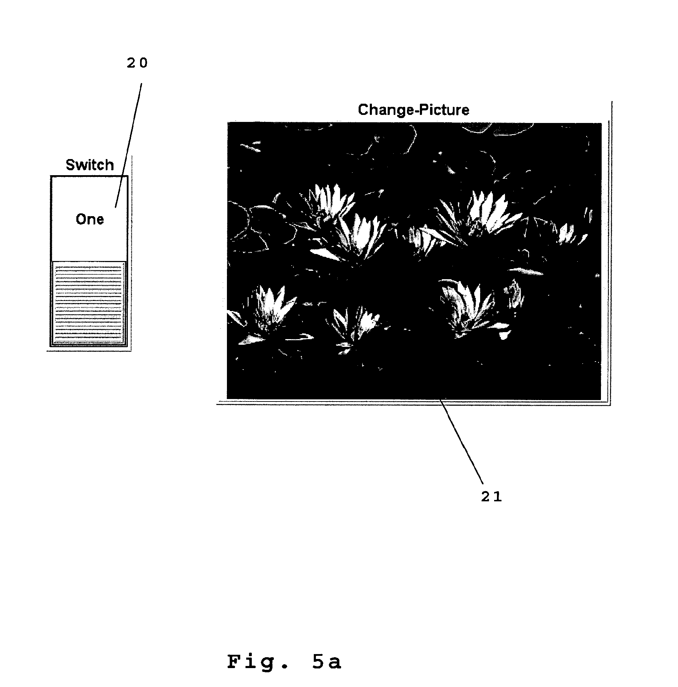

In den Fign. 5a bis 5c ist die erfindungsgemäße Anlegung von Objekten und der entsprechende Programmcodeabschnitt eines Ereignisbausteins dargestellt, in welchem die erzeugten Objekte verwendet werden.

Zunächst sei auf Fig. 5a verwiesen, die einen Visualisierungsbildschirm mit einem Schalterobjekt 20 und dem individuellen Namen "Switch" in einer Schalterstellung "One" zeigt. Darüber hinaus ist ein Bildobjekt 21 dargestellt mit dem individuellen Namen "Change-Picture" aus der Ausgabe eines von zwei Bildern.

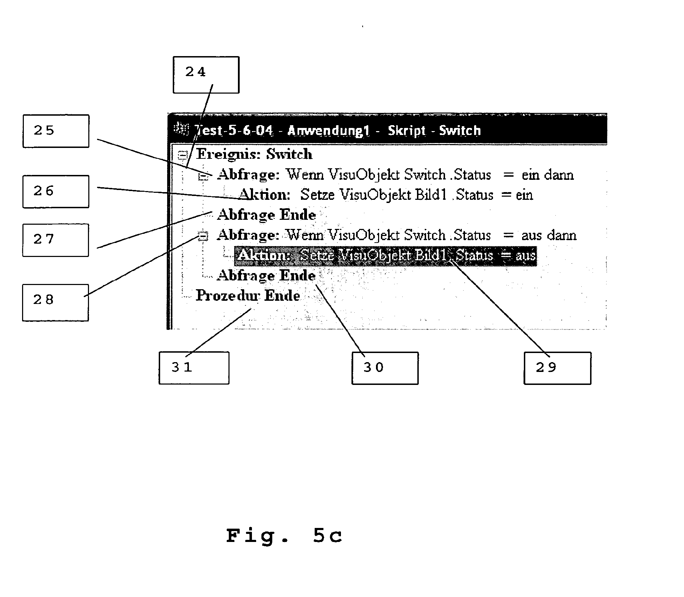

Ein solches Visualisierungsschaubild dient zum Bedienen und Beobachten bei der Abarbeitung des erstellten Programms. Dagegen sind in der Fig. 5c die Programmanweisungen angegeben, die den gewünschten Programmverlauf erzeugen.

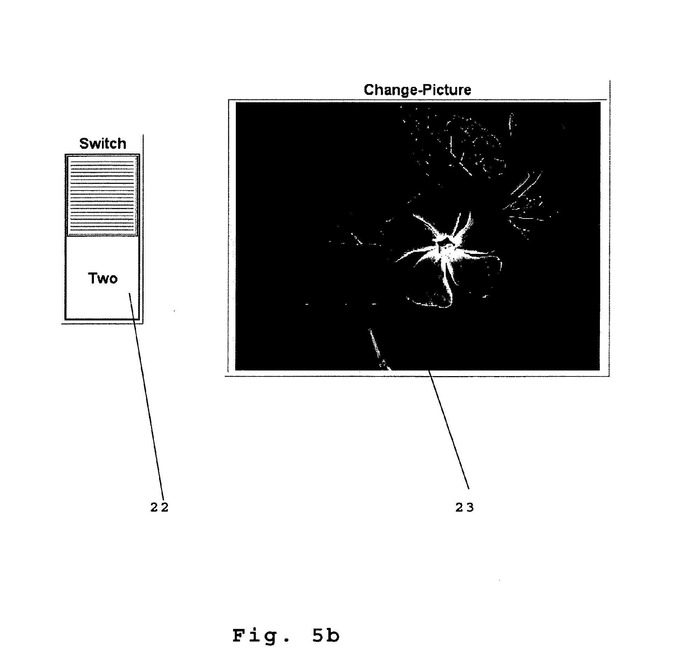

Die Abbildungen 5a und 5b stellen die gleichen Visualisierungsobjekte dar. In Abbildung 5a ist der Schalter 20 mit dem individuellen Namen "Switch" in der Stellung "One", während in Abbildung 5b der gleiche Schalter 22 in der Stellung "Two" steht. Den jeweiligen Schalterstellungen ist ein Bildobjekt 21 beziehungsweise 23 zugeordnet. Abhängig von der Schalterstellung 20, 22 erscheint entweder das Bild entsprechend 21 oder das Bild entsprechend 23. Das Bildobjekt kann somit aufgrund seiner Definition zwei unterschiedliche Bilder darstellen.

Die Aufgabe des Programmablaufs gemäß Fig. 5c besteht darin, beim Betätigen des Schalters 22, 23 von einer der beiden Stellungen "One" oder "Two" in die jeweils andere, das Bild des Bildobjektes 21, 32 von "Bild A" 21 nach "Bild B" 23 zu wechseln und umgekehrt. Demnach ist die Stellung "One" dem Bild 21, und der Stellung "Two" das Bild 23 zugeordnet. Diesem Ablauf entspricht im Strukturschaubild ein Ereignisprogrammbaustein, wie er in Fig. 4 mit dem Symbol 18 dargestellt ist. Fig. 5c stellt den Programmcodeabschnitt dar, welcher diesem Ereignisprogrammbaustein entspricht. Wie obenstehend schon erläutert, kann der Anwender durch Anwählen des Programmbausteins 18 dessen Programmcodeabschnitt öffnen. Der sich dann öffnende Programmcodeabschnitt ist nach dessen Erweiterung in Fig. 5c dargestellt. Mit dem Anlegen des Ablaufs im Strukturschaubild werden die Zeilen 24 und 31 automatisch angelegt. Diese kennzeichnen den Anweisungstyp Ereignis und den Namen "Switch" des Ablaufs. Vom System wird automatisch der Name des korrespondierenden Objektes 20, 22 auf der Visualisierungsoberfläche verwendet, sodass der Anwender hier keine weitere Eingabe durchführen muss.

Der Anwender kann nun rechnergestützt zusätzliche Programmanweisungen hinzufügen, welche entweder Anweisungen der Kategorie Abfrage oder der Kategorie Aktion sind. Auf die Art und Weise der Hinzufügung wird weiter untenstehend eingegangen.

Aufgrund der Vorgabe sind die hinzugefügten Programmanweisungen 25 bis 30 entweder Abfrage- oder Aktionsanweisungen. Die Abfrageanweisungen 25, 27 beziehungsweise 28, 30 sind sogenannte Blockanweisungen, welche aus zwei Zeilen bestehen. Sie schließen in der Regel weitere Anweisungen ein, wobei ein logischer Bezug zwischen den Blockanweisungen und den in der Blockanweisung eingeschlossenen Anweisungen besteht.

Der in Fig. 5c dargestellte Ereignisbaustein in Form seiner Programmanweisung ist mit dem Visualisierungsobjekt "Switch" 20, 22 verknüpft, wobei das Ereignis ausgelöst wird, wenn der Schalter 20, 22 umgelegt wird. Dieser Programmverlauf wird durch den Anwender in der Visualisierungsoberfläche durch Betätigen des Schalters gestartet.

Im einzelnen stellen die Zeilen 25, 26 und 27 einen Anweisungsblock dar, wobei die Zeile 25 eine Wenn ... dann-Anweisung ist. Sie bedeutet, dass die Aktionsanweisung 26 ausgeführt wird, wenn sich der Schalter in der Stellung "21" befindet. Diese setzt dann das Visualisierungsobjekt 21, 23 auf den Status "ein", was dem Bild 21 entspricht. Insofern wird bei der Betätigung des Schalters in die Stellung "ein" das Bild 21 dargestellt.

In gleicher Weise stellen die Zeilen 28, 29 und 30 ebenfalls einen Anweisungsblock dar, wobei die Wenn ... dann-Anweisung in Zeile 28 verursacht, dass die Aktionsanweisung 29 ausgeführt wird, wenn der Schalter sich in der Stellung 22, d.h. in der Stellung "aus" befindet. Mit der Aktionsanweisung 28 wird das Visualisierungsobjekt 21, 23 auf den Status "aus" gesetzt, welcher dem Bild 23 zugeordnet ist. Insofern wird das Bild 23 dargestellt, wenn sich der Schalter in der Stellung "aus" befindet.

Der angegebene und mit dem erfindungsgemäßen System erzeugte Programmcode verursacht, dass bei jedem Umlegen des Schalters im Visualisierungsschaubild die Abarbeitung des in Fig. 5c dargestellten Programmcodes gestartet wird, wodurch das Visualisierungsobjekt 21, 23 das Bild wechselt.

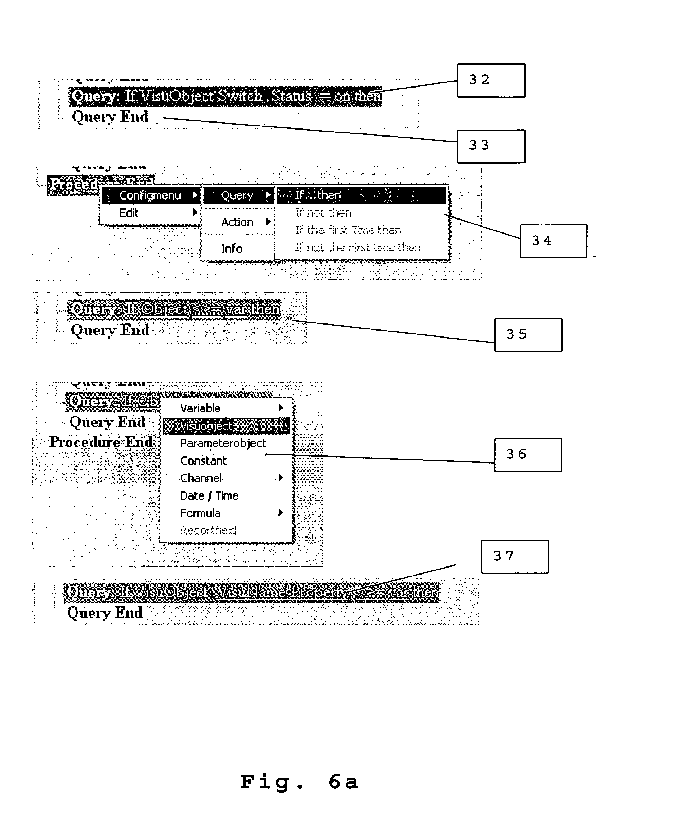

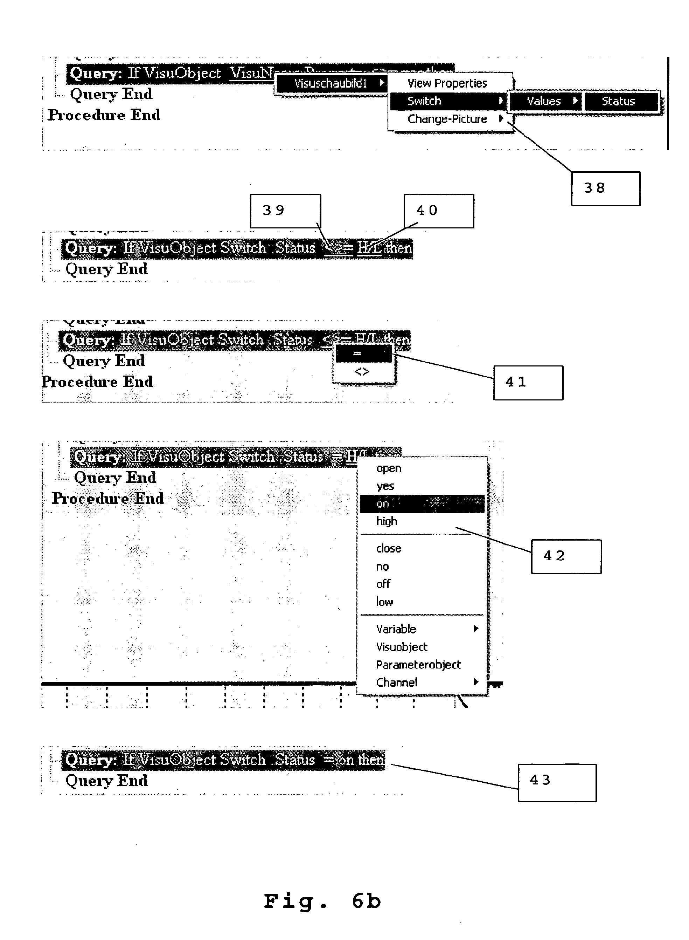

Mit Bezug auf die Fign. 6a, b wird im Folgenden das erfindungsgemäße Einfügen einer Programmzeile in einen Programmbaustein mit Hilfe von Schlüsselwörtern und korrespondierenden Auswahllisten gezeigt. Hierdurch wird der Anwender in die Lage versetzt, Programmcode zu erzeugen, ohne dass dieser eine einzige Zeile selbst eintippen muss. Die Auswahllisten umfassen je nach Ausführungsform weitere Schlüsselworte, Programmanweisungen, Variable, Objekte, Eigenschaften von Objekten, Rechenzeichen und/oder logische Operatoren. Die Zeilen 32 und 33 zeigen die fertige Anweisung, deren Erstellung im Folgenden erläutert wird, siehe Fig. 6a. Ziel ist demnach die Erzeugung einer If ... then-, d.h. einer Wenn ... dann-Blockanweisung. Diese Anweisung drückt aus, dass Aktionsanweisungen, welche zwischen den Zeilen 32 und 33 eingefügt werden können nur ausgeführt werden, wenn das Ergebnis der logischen Operation in der Wenn ... dann-Blockanweisung wahr ist.

Der erste Schritt bei der Einfügung einer neuen Anweisung ist mit der Anzeige einer Auswahlliste 34 verbunden, die als Kontextmenü gestaltet ist. Wie zu erkennen, bietet das System zur Einfügung entweder eine Abfrage oder eine Aktion als die beiden möglichen Kategorien von Anweisungen an. Vorliegend ist die Abfrageanweisung ausgewählt, insofern wird automatisch die Auswahlliste 34 für die Abfrageanweisung angezeigt. Der Anwender kann nun über die Maus eine der angezeigten Abfrageanweisungen in der Auswahlliste 34 auswählen und mit einem Klick bestätigen. Im Ansprechen darauf wird vom System die neue Zeile 35 eingefügt, die als Rohkörper einer Wenn ... dann-Anweisung oder als virtuelle Anweisung bezeichnet werden kann. Die Zeile 35 weist drei Schlüsselworte auf, die zur Kennzeichnung unterstrichen sind und der Reihe nach durch ausführbaren Programmtext, Programmtextabschnitte oder weitere Schlüsselworte ersetzt werden müssen.

Insofern wird vom Anwender zuerst das Schlüsselwort "Object" der Zeile 35 durch Anklicken angewählt, worauf sich die Auswahlliste 36 des Schlüsselwortes "Object" öffnet. Diese Auswahlliste 36 stellt alle möglichen Programmtexte beziehungsweise Programmtextabschnitte oder Schlüsselworte dar, mit denen das ausgewählte Schlüsselwort "Object" ersetzt werden kann. Vorliegend wird in der Auswahlliste die Zeile "Visuobjekt" ausgewählt, wodurch der Zugriff auf die Objekte des in den Fign. 5a und 5b gezeigten Visualisierungsschaubildes ermöglicht wird. Wie in der Figur erkennbar, wird das Schlüsselwort "Object" durch "Visuobject Visuname Property" ersetzt. Dies bedeutet, dass das Schlüsselwort "Object" durch den Textbaustein ersetzt wurde, der aus der Objektkategorie "Visuobject" und dem neuen Schlüsselwort "Visuname Property" besteht.

Als nächste Aufgabe muss demnach das neue Schlüsselwort 37 ersetzt werden, mit dem der Zugang zu den Eigenschaften der Visualisierungsobjekte 20, 21 ermöglicht wird. Durch Anwählen und Anklicken des Schlüsselwortes "Visuname Property" in der Zeile 37 öffnet sich die zugeordnete Auswahlliste 38, siehe Fig. 6b.

Der Umfang der Auswahlliste 38 ist von der Anzahl der angelegten Visualisierungsobjekte und der Anzahl der Eigenschaften der einzelnen Visualisierungsobjekte abhängig. Sobald ein weiteres Visualisierungsobjekt in einem Visualisierungsschaubild angelegt wird, erweitert das erfindungsgemäße System automatisch die Auswahlliste 38. Vorliegend ist die markierte Zeile "Switch/Status" der Auswahlliste 38 ausgewählt, was sich in der darunter stehenden Anweisungszeile niederschlägt, die noch keine ausführbare Anweisung darstellt, da sie weitere Schlüsselwörter aufweist.

Dem Anwender steht es in der beschriebenen Ausführungsform des erfindungsgemäßen Systems frei für jedes Visualisierungsobjekt zu bestimmen, welche Eigenschaften von Objekten oder eines bestimmten Objektes in den zugeordneten Auswahllisten auftreten sollen. Letztlich wird für alle auftretende Objekte, wie beispielsweise in Parameterschaubildern, Visualisierungsschaubildern, Druckobjekten, Variablen etc. zugeordnete Auswahllisten vom erfindungsgemäßen System automatisch erzeugt, sodass der Anwender bis auf die obenstehend angegebene Ausnahme keine eigenen diesbezüglichen Eingaben durchführen muss.

In dem in den Fign. 6a, b angegebenen Beispiel sind noch die verbleibenden Schlüsselworte 39 und 40 festzulegen, welche die logische Operation der Abfrage darstellen. Durch Anwahl des Schlüsselwortes 39 öffnet sich dessen Auswahlliste 41. Gewählt wird der logische Operator "=". Wie in der darunter stehenden Zeile ersichtlich, wird daraufhin das Schlüsselwort 39 durch das Gleichheitszeichen ersetzt. Nachfolgend wird das Schlüsselwort H/L 40 angewählt, sodass sich automatisch dessen Auswahlliste 42 öffnet. Die in der Liste 42 angegebenen Begriffe "o-pen; yes; on; high" stellen Synonyme für eine logische 1 dar, während die Begriffe "close; no; off; low" Synonyme für eine logische 0 darstellen. Die weiteren Punkte der Auswahlliste 42 sind Objekte und Objekteigenschaften. Vorliegend wird in der Auswahlliste 42 "on" ausgewählt, was sich in der nun vollständigen und abarbeitbaren Anweisungszeile 43 niederschlägt. Diese Blockanweisung stellt somit das fertige Ergebnis innerhalb des erfindungsgemäßen Programmiersystems dar, das durch wenige Mausklicks erzeugt worden ist.

Auf die beschriebene Weise ist computergestützt jedes beliebige Programm für einen Anwender ohne besondere Kenntnisse erzeugbar.

### Bezugszeichenliste

- 1: Computer
- 1a: Datenverarbeitungsmittel
- 1b: Speichermittel
- 1c: Eingabemittel
- 3: Visualisierungsschaubild
- 4: Strukturschaubild
- 5: Druckerschnittstelle
- 6: Drucker
- 7: Umweltschnittstelle
- 8: Symbol des Startbausteins der Kategorie Ablauf
- 9: Symbol des Ablaufbausteins der Kategorie Ablauf
- 10: Symbol des Endbausteins der Kategorie Ablauf
- 11: Symbol des Ereignisbausteins der Kategorie Ablauf
- 12: Symbol des Funktionsbausteins der Kategorie Funktion
- 13: Symbol des Startbausteins der Kategorie Ablauf
- 14: Ablaufbaustein der Kategorie Ablauf
- 15: Ablaufbaustein der Kategorie Ablauf
- 16: Funktionsbaustein der Kategorie Funktion
- 17: Endbaustein der Kategorie Ablauf
- 18: Symbol eines Ereignisbausteins der Kategorie Ablauf
- 19: Symbol eines Endbausteins der Kategorie Ablauf
- 20: Schalterobjekt
- 21: Bildobjekt
- 22: Schalterobjekt
- 23: Bildobjekt
- 24 - 31: Programmzeilen eines Ereignisbausteins
- 32, 33: Blockanweisung
- 34: Auswahlliste
- 35: Rohkörper einer Blockanweisung
- 36: Auswahlliste
- 37: Schlüsselwort
- 38: Auswahlliste
- 39: Schlüsselwort
- 40: Schlüsselwort
- 41: Auswahlliste
- 42: Auswahlliste
- 43: Programmanweisung

## Patentansprüche

1. Computergestütztes Verfahren zum Erstellen und/oder Abarbeiten von Programmcode (Softwarecode), mit zumindest einer Visualisierungsoberfläche zur Darstellung von festlegbaren Objekten, über welche bei der Abarbeitung des Programmcodes Information, insbesondere Daten eingegeben und ausgegeben werden, wobei mittels des erstellten Programmcodes schreibend und lesend auf Objekte der Visualisierungsoberfläche zugegriffen wird, **dadurch gekennzeichnet, dass** Programmbausteine der Kategorie Ablauf und Funktion zur Auswahl bereitgestellt werden, und Vorschriften zum Verknüpfen von Programmbausteinen vorgegeben werden, die den Aufruf der Programmbausteine und deren serielle oder gleichzeitige Abarbeitung regeln.

2. Verfahren nach Anspruch 1, **dadurch gekennzeichnet, dass** Programmbausteine der Kategorie Ablauf seriell verknüpft werden, und bei einer Verzweigung der Programmverlauf durch die Festlegung einer Bedingung zu einem von mehreren unterschiedlichen Abläufen geführt wird.

3. Verfahren nach einem der Ansprüche 1 oder 2, **dadurch gekennzeichnet, dass** der Bausteintyp Ereignisbaustein (11) der Kategorie Ablauf durch Ereignisse, die im Programmablauf eintreten, aufgerufen wird, und der Ereignisbaustein seinerseits Abläufe und Funktionen aufrufen kann.

4. Verfahren nach einem der Ansprüche 1 bis 3, **dadurch gekennzeichnet, dass** die Programmbausteinkategorie Funktion den Bausteintyp Funktionsbaustein (12) umfasst, wobei der Funktionsbaustein durch einen Bausteintyp der Kategorie Ablauf aufgerufen wird, und durch den Funktionsbaustein Aufgaben erledigt werden, die parallel zu dem aufrufenden Baustein ausgeführt werden.

5. Verfahren nach einem der Ansprüche 1 bis 4, **dadurch gekennzeichnet, dass** den ausgewählten Programmbausteinen jeweils ein Symbol (8 - 13) zugeordnet ist, dass in einem Strukturschaubild (4) dargestellt wird.

6. Verfahren nach Anspruch 5, **dadurch gekennzeichnet, dass** die Symbole (8 - 13) unter Berücksichtigung der vorgegebenen Regeln automatisch mittels Linien zur Darstellung der seriellen oder parallelen Abarbeitung miteinander verbunden werden, wodurch die Programmstruktur und der Programmverlauf dargestellt werden.

7. Verfahren nach einem der Ansprüche 5 oder 6, **dadurch gekennzeichnet, dass** im Strukturschaubild (4) Symbole (8 - 13) für Programmbausteine der Kategorie Ablauf zu Symbolen (8 - 13) für Programmbausteine der Kategorie Funktion grundsätzlich auf zueinander senkrechten Pfaden angeordnet werden.

8. Verfahren nach einem der Ansprüche 5 bis 7, **dadurch gekennzeichnet, dass** durch Auswahl eines Symbols (8 - 13) im Strukturschaubild (4) der Programmcodeabschnitte des diesem Symbol (8 - 13) zugeordneten Programmbausteins zugänglich wird.

9. Verfahren nach einem der Ansprüche 1 bis 7, **dadurch gekennzeichnet, dass** bei der Hinzufügung einer Programmanweisung zu dem Programmcodeabschnitt eines Programmbausteins eine Programmanweisung aus einer von zwei Programmanweisungskategorien zur Auswahl bereitgestellt wird.

10. Verfahren nach Anspruch 9, **dadurch gekennzeichnet, dass** eine Programmanweisung eingefügt wird, die zumindest ein Schlüsselwort (37, 39, 40)) umfasst.

11. Verfahren nach Anspruch 10, **dadurch gekennzeichnet, dass** bei Anwahl eines Schlüsselwortes (37, 39, 40) in einer eingefügten Programmanweisung (43) eine Auswahlliste (34, 36, 38, 41, 42) angezeigt wird, welche syntaxfehlerfreie Programmtextabschnitte umfasst, mit denen das Schlüsselwort ersetzbar ist.

12. Verfahren nach Anspruch 10 oder 11, **dadurch gekennzeichnet, dass** der Vorgang des Ersetzens von Schlüsselwörtern (37, 39, 40) in einer eingefügten Programmanweisung (43) solange fortgesetzt wird, bis alle Schlüsselwörter durch einen ausführbaren Programmanweisungsabschnitt ersetzt sind.

13. Verfahren nach Anspruch 11 oder 12, **dadurch gekennzeichnet, dass** durch den Anwender angelegte Objekte, insbesondere Visualisierungsobjekte, Parameterobjekte, Variablen, Programmbausteine, automatisch in die jeweiligen Auswahllisten mit ihren individuellen Namen aufgenommen werden.

14. Verfahren nach Anspruch 13, **dadurch gekennzeichnet, dass** mit Anlegung des Objektes festlegbar ist, welche Eigenschaften des Objektes in die Auswahllisten aufgenommen werden.

15. System mit einer Ausführungsumgebung zum computergestützten Erstellen und/oder Abarbeiten von Programmcode (Softwarecode) umfassend zumindest eine Visualisierungsoberfläche zur Darstellung von Objekten, welche bei der Abarbeitung des Programmcodes Eingaben und Ausgaben von Information, insbesondere eine Dateneingabe und eine Datenausgabe bereitstellen, wobei erstellter Programmcode schreibend und lesend auf Objekte der Visualisierungsoberfläche zugreift, **dadurch gekennzeichnet, dass** vom System zur Erstellung des Programmcodes auswählbare Programmbausteine der Kategorie Ablauf und Funktion bereitgestellt sind, und Vorschriften zum Verknüpfen von Programmbausteinen vorgegeben sind, die den Aufruf der Programmbausteine und deren serielle oder gleichzeitige Abarbeitung regeln.

16. System nach Anspruch 15, **dadurch gekennzeichnet, dass** die Programmbausteinkategorie Ablauf die Bausteintypen Ablaufbaustein (9), Startbaustein (8), Ereignisbaustein (11) und Endbaustein (10) umfasst.

17. System nach einem der Ansprüche 15 oder 16, **dadurch gekennzeichnet, dass** Typen der Programmbausteine in einem Strukturschaubild (4) jeweils ein Symbol (8 - 13) zugeordnet ist, und die Symbole(8 - 13) in dem Strukturschaubild (4) nach festen Regeln über Linien verbunden sind, wodurch die Programmstruktur und der Programmverlauf dargestellt ist.

18. System nach einem der Ansprüche 17, **dadurch gekennzeichnet, dass** Pfeile in den Verbindungslinien zwischen den Symbolen (8 - 13) der Programmbausteine im Strukturschaubild (4) angeordnet sind, die den Programmverlauf anzeigen.

19. System nach einem der Ansprüche 17 oder 18, **dadurch gekennzeichnet, dass** im Strukturschaubild (4) die Symbole (8 - 13) der seriell verknüpften Programmbausteine grundsätzlich vertikal angeordnet sind, und dass die parallel arbeitenden Programmbausteine grundsätzlich horizontal angeordnet sind.

20. System nach einem der Ansprüche 17 bis 19, **dadurch gekennzeichnet, dass** im Strukturschaubild (4) die Verbindungslinien zwischen den Programmbausteinen eines Ablaufs grundsätzlich vertikal verlaufen, wobei bei einer Programmverzweigung in mehrere Abläufe ein horizontaler Versatz zur Anordnung der Symbole (8 - 13) vorgesehen ist, und dass die Verbindungslinien von den aufrufenden Bausteinen des Typs Ablauf zu den jeweiligen aufgerufenen Funktionsbausteinen grundsätzlich horizontal verlaufen, wobei bei einem Aufruf von mehreren Funktionen aus einem Ablaufbaustein ein vertikaler Versatz zwischen den Funktionsbausteinen vorgesehen ist.

21. System nach einem der Ansprüche 17 oder 18, **dadurch gekennzeichnet, dass** im Strukturschaubild (4) Symbole (8 - 13) der Bausteine der Kategorie Ablauf grundsätzlich horizontal und Symbole (8 - 13) der Bausteine der Kategorie Funktion grundsätzlich vertikal angeordnet sind.

22. System nach einem der Ansprüche 17 bis 21, **dadurch gekennzeichnet, dass** ein Symbol (8 - 13) im Strukturschaubild (4) einen virtuellen Programmcontainer darstellt, und der Zugang zum Programmcodeabschnitt des jeweiligen Programmbausteins durch Öffnen des Programmcontainers erfolgt, insbesondere durch Auswahl des Symbols (8 - 13) im Strukturschaubild (4) .

23. System nach einem der Ansprüche 15 bis 22, **dadurch gekennzeichnet, dass** das System einen Entwicklungsmodus und einen Laufzeitmodus bereitstellt, wobei im Laufzeitmodus ein im Entwicklungsmodus erstellter Programmcode abgearbeitet wird, und die Symbole (8 - 13) im Strukturschaubild (4) **gekennzeichnet sind**, deren Programmanweisungen gerade abgearbeitet werden.

24. System nach einem der Ansprüche 15 bis 23, **dadurch gekennzeichnet, dass** eine Programmanweisung einer der beiden Programmanweisungskategorien Abfrage oder Aktion zugeordnet ist.

25. System nach Anspruch 24, **dadurch gekennzeichnet, dass** beim Anlegen einer neuen Programmanweisung nur eine der beiden Programmanweisungskategorien Abfrage oder Aktion auswählbar ist.

26. System nach einem der Ansprüche 24 oder 25, **dadurch gekennzeichnet, dass** eine auswählbare Programmanweisung zumindest ein Schlüsselwort enthält, das einen Platzhalter für zumindest ein weiteres Schlüsselwort und/oder einen Programmanweisungsabschnitt darstellt.

27. System nach Anspruch 26, **dadurch gekennzeichnet, dass** ein Schlüsselwort mit einer diesem zugeordneten Auswahlliste verknüpft ist, welche insbesondere gültige Programmtextabschnitte umfasst, mit denen das Schlüsselwort ersetzbar ist.

28. System nach einem der Ansprüche 27, **dadurch gekennzeichnet, dass** die Inhalte der einzelnen Positionen der jeweiligen Auswahlliste so gestaltet sind, dass nach dem Ersetzen des Schlüsselwortes durch eine der Position der Auswahlliste ein syntaxfehlerfreier Programmanweisungsabschnitt vorliegt.

29. System nach einem der Ansprüche 27 oder 28, **dadurch gekennzeichnet, dass** Programmanweisungen wie Zuweisungen, Schleifen, Aufrufe in den Auswahllisten enthalten sind.

30. Auf einem Speichermedium abgelegtes Computerprogrammprodukt, das in einen Speicher eines Computer geladen werden kann und das Softwarecodeabschnitte umfasst, mit denen ein Verfahren nach einem der Ansprüche 1 bis 14, insbesondere auf einem System nach einem der Ansprüche 15 bis 29 ausgeführt wird, wenn das Produkt auf dem Computer läuft.

## Geänderte Patentansprüche

### Geänderte Patentansprüche gemäss Regel 86(2) EPÜ.

**1.** Computergestütztes Verfahren zum Erstellen und/oder Abarbeiten von Programmcode (Softwarecode), mit zumindest einer Visualisierungsoberfläche zur Darstellung von festlegbaren Objekten, über welche bei der Abarbeitung des Programmcodes Information eingegeben und ausgegeben werden, wobei mittels des erstellten Programmcodes schreibend und lesend auf Objekte der Visualisierungsoberfläche zugegriffen wird, **dadurch gekennzeichnet**, das s Programmbausteine der Kategorie Ablauf und Funktion zur Auswahl bereitgestellt werden, und Vorschriften zum Verknüpfen von Programmbausteinen vorgegeben werden, die den Aufruf der Programmbausteine und deren serielle oder gleichzeitige Abarbeitung regeln, dass Programmbausteine der Kategorie Ablauf seriell verknüpft werden und der Bausteintyp Ereignisbaustein (11) der Kategorie Ablauf durch Ereignisse, die im Programmablauf eintreten, aufgerufen wird, und der Ereignisbaustein seinerseits Abläufe und Funktionen aufrufen kann, dass die Programmbausteinkategorie Funktion den Bausteintyp Funktionsbaustein (12) umfasst, wobei der Funktionsbaustein durch einen Bausteintyp der Kategorie Ablauf aufgerufen wird, und durch den Funktionsbaustein Aufgaben erledigt werden, die parallel zu dem aufrufenden Baustein ausgeführt werden, wobei den ausgewählten Programmbausteinen jeweils ein Symbol (8 - 13) zugeordnet ist, das in einem Strukturschaubild (4) dargestellt wird.

**2.** Verfahren nach einem der Ansprüche 1, **dadurch gekennzeichnet, dass** bei einer Verzweigung der Programmverlauf durch die Festlegung einer Bedingung zu einem von mehreren unterschiedlichen Abläufen geführt wird.

**3.** Verfahren nach Anspruch 1 oder 2, **dadurch gekennzeichnet, dass** die Symbole (8 - 13) unter Berücksichtigung der vorgegebenen Regeln mittels Linien zur Darstellung der seriellen oder parallelen Abarbeitung miteinander verbunden werden, wodurch die Programmstruktur und der Programmverlauf dargestellt werden.

**4.** Verfahren nach einem der Ansprüche 1 bis 3, **dadurch gekennzeichnet, dass** im Strukturschaubild (4) Symbole (8 - 13) für Programmbausteine der Kategorie Ablauf zu Symbolen (8 - 13) für Programmbausteine der Kategorie Funktion auf zueinander senkrechten Pfaden angeordnet werden.

**5.** Verfahren nach einem der Ansprüche 1 bis 4, **dadurch gekennzeichnet, dass** durch Auswahl eines Symbols (8 - 13) im Strukturschaubild (4) der Programmcodeabschnitte des diesem Symbol (8 - 13) zugeordneten Programmbausteins zugänglich wird.

**6.** Verfahren nach einem der Ansprüche 1 bis 5, **dadurch gekennzeichnet, dass** bei der Hinzufügung einer Programmanweisung zu dem Programmcodeabschnitt eines Programmbausteins eine Programmanweisung aus einer von zwei Programmanweisungskategorien zur Auswahl bereitgestellt wird.

**7.** Verfahren nach Anspruch 6, **dadurch gekennzeichnet**, das s eine Programmanweisung eingefügt wird, die zumindest ein Schlüsselwort (37, 39, 40)) umfasst.

**8.** Verfahren nach Anspruch 7, **dadurch gekennzeichnet, dass** bei Anwahl eines Schlüsselwortes (37, 39, 40) in einer eingefügten Programmanweisung (43) eine Auswahlliste (34, 36, 38, 41, 42) angezeigt wird, welche syntaxfehlerfreie Programmtextabschnitte umfasst, mit denen das Schlüsselwort ersetzbar ist.

**9.** Verfahren nach Anspruch 7 oder 8, **dadurch gekennzeichnet, dass** der Vorgang des Ersetzens von Schlüsselwörtern (37, 39, 40) in einer eingefügten Programmanweisung (43) solange fortgesetzt wird, bis alle Schlüsselwörter durch einen ausführbaren Programmanweisungsabschnitt ersetzt sind.

**10.** Verfahren nach Anspruch 8 oder 9, **dadurch gekennzeichnet, dass** durch den Anwender angelegte Objekte, insbesondere Visualisierungsobjekte und deren Eigenschaften, Parameterobjekte und deren Eigenschaften, Variablen, Programmbausteine, automatisch in die jeweiligen Auswahllisten mit ihren individuellen Namen aufgenommen werden.

**11.** Verfahren nach Anspruch 10, **dadurch gekennzeichnet, dass** mit Anlegung des Objektes festlegbar ist, welche Eigenschaften des Objektes in die Auswahllisten aufgenommen werden.

**12.** System mit einer Ausführungsumgebung zum computergestützten Erstellen und/oder Abarbeiten von Programmcode (Softwarecode) umfassend zumindest eine Visualisierungsoberfläche zur Darstellung von Objekten, welche bei der Abarbeitung des Programmcodes Eingaben und Ausgaben von Information bereitstellen, wobei erstellter Programmcode schreibend und lesend auf Objekte der Visualisierungsoberfläche zugreift, **dadurch gekennzeichnet, dass** vom System zur Erstellung des Programmcodes auswählbare Programmbausteine der Kategorie Ablauf und Funktion bereitgestellt sind, und Vorschriften zum Verknüpfen von Programmbausteinen vorgegeben sind, die den Aufruf der Programmbausteine und deren serielle oder gleichzeitige Abarbeitung regeln, dass die Programmbausteine der Kategorie Ablauf seriell verknüpft werden, , dass die Programmbausteinkategorie Funktion den Bausteintyp Funktionsbaustein (12) umfasst, wobei der Funktionsbaustein durch einen Bausteintyp der Kategorie Ablauf aufrufbar ist, und durch den Funktionsbaustein Aufgaben erledigt werden, die parallel zu dem aufrufenden Baustein ausgeführt werden und den Typen der Programmbausteine in einem Strukturschaubild (4) jeweils ein Symbol (8 - 13) zugeordnet ist.

**13.** System nach Anspruch 12, **dadurch gekennzeichnet, dass** die Programmbausteinkategorie Ablauf die Bausteintypen Ablaufbaustein (9), Startbaustein (8), Ereignisbaustein (11) und Endbaustein (10) umfasst.

**14.** System nach einem der Ansprüche 12 oder 13, **dadurch gekennzeichnet, dass** die Symbole (8 - 13) in dem Strukturschaubild (4) nach festen Regeln über Linien verbunden sind, wodurch die Programmstruktur und der Programmverlauf dargestellt ist.

**15.** System nach einem der Ansprüche 14, **dadurch gekennzeichnet, dass** Pfeile in den Verbindungslinien zwischen den Symbolen (8 - 13) der Programmbausteine im Strukturschaubild (4) angeordnet sind, die den Programmverlauf anzeigen.

**16.** System nach einem der Ansprüche 14 oder 15, **dadurch gekennzeichnet, dass** im Strukturschaubild (4) die Symbole (8 - 13) der seriell verknüpften Programmbausteine grundsätzlich vertikal angeordnet sind, und dass die parallel arbeitenden Programmbausteine grundsätzlich horizontal angeordnet sind.

**17.** System nach einem der Ansprüche 14 bis 16, **dadurch gekennzeichnet, dass** im Strukturschaubild (4) die Verbindungslinien zwischen den Programmbausteinen eines Ablaufs vertikal verlaufen, wobei bei einer Programmverzweigung in mehrere Abläufe ein horizontaler Versatz zur Anordnung der Symbole (8 -13) vorgesehen ist, und dass die Verbindungslinien von den aufrufenden Bausteinen des Typs Ablauf zu den jeweiligen aufgerufenen Funktionsbausteinen horizontal verlaufen, wobei bei einem Aufruf von mehreren Funktionen aus einem Ablaufbaustein ein vertikaler Versatz zwischen den Funktionsbausteinen vorgesehen ist.

**18.** System nach einem der Ansprüche 14 oder 15, **dadurch gekennzeichnet, dass** im Strukturschaubild (4) Symbole (8 - 13) der Bausteine der Kategorie Ablauf horizontal und Symbole (8 - 13) der Bausteine der Kategorie Funktion vertikal angeordnet sind.

**19.** System nach einem der Ansprüche 14 bis 18, **dadurch gekennzeichnet, dass** ein Symbol (8 - 13) im Strukturschaubild (4) einen virtuellen Programmcontainer darstellt, und der Zugang zum Programmcodeabschnitt des jeweiligen Programmbausteins durch Öffnen des Programmcontainers erfolgt.

**20.** System nach einem der Ansprüche 12 bis 19, **dadurch gekennzeichnet, dass** das System einen Entwicklungsmodus und einen Laufzeitmodus bereitstellt, wobei im Laufzeitmodus ein im Entwicklungsmodus erstellter Programmcode abgearbeitet wird, und die Symbole (8 - 13) im Strukturschaubild (4) **gekennzeichnet** sind, deren Programmanweisungen gerade abgearbeitet werden.

**21.** System nach einem der Ansprüche 12 bis 20, **dadurch gekennzeichnet, dass** eine Programmanweisung einer der beiden Programmanweisungskategorien Abfrage oder Aktion zugeordnet ist und beim Anlegen einer neuen Programmanweisung nur eine der beiden Programmanweisungskategorien Abfrage oder Aktion auswählbar ist.

**22.** System nach einem der Ansprüche 20 oder 21, **dadurch gekennzeichnet, dass** eine auswählbare Programmanweisung zumindest ein Schlüsselwort enthält, das einen Platzhalter für zumindest ein weiteres Schlüsselwort oder einen Programmanweisungsabschnitt darstellt.

**23.** System nach einem der Ansprüche 20 oder 21, **dadurch gekennzeichnet, dass** eine auswählbare Programmanweisung zumindest ein Schlüsselwort enthält, das einen Platzhalter für zumindest ein weiteres Schlüsselwort und einen Programmanweisungsabschnitt darstellt.

**24.** System nach Anspruch 23, **dadurch gekennzeichnet**, das s ein Schlüsselwort mit einer diesem zugeordneten Auswahlliste verknüpft ist, welche gültige Programmtextabschnitte umfasst, mit denen das Schlüsselwort ersetzbar ist.

**25.** System nach einem der Ansprüche 24, **dadurch gekennzeichnet, dass** die Inhalte der einzelnen Positionen der jeweiligen Auswahlliste so gestaltet sind, dass nach dem Ersetzen des Schlüsselwortes durch eine der Position der Auswahlliste ein syntaxfehlerfreier Programmanweisungsabschnitt vorliegt.

**26.** System nach einem der Ansprüche 24 oder 25, **dadurch gekennzeichnet, dass** Programmanweisungen wie Zuweisungen, Schleifen, Aufrufe in den Auswahllisten enthalten sind.

**27.** Auf einem Speichermedium abgelegtes Computerprogrammprodukt, das in einen Speicher eines Computer geladen werden kann und das Softwarecodeabschnitte umfasst, mit denen ein Verfahren nach einem der Ansprüche 1 bis 11, ausgeführt wird, wenn das Produkt auf dem Computer läuft.
